# EUROPEAN PATENT SPECIFICATION

(11) **EP 4 325 653 B1**
(45) Date of publication and mention of the grant of the patent: **28.10.2026**
(21) Application number: 23747372.3
(22) Date of filing: 27.01.2023
(51) Int. Cl.: H01M 50/543, H01M 10/052, H01M 50/105, H01M 50/553, H01M 50/566

(54) **BATTERY CELL AND MANUFACTURING METHOD THEREOF**
BATTERIEZELLE UND VERFAHREN ZU IHRER HERSTELLUNG
CELLULE DE BATTERIE ET SON PROCÉDÉ DE FABRICATION

(30) Priority: 28.01.2022 KR 20220013633; 26.01.2023 KR 20230010154
(43) Date of publication of application: 21.02.2024
(73) Proprietor: LG Energy Solution, Ltd., Seoul 07335 (KR)
(72) Inventor: LEE, Changje, Daejeon 34122 (KR); YOON, Seung Jae, Daejeon 34122 (KR); KIM, Sanghun, Daejeon 34122 (KR)
(74) Representative: Plasseraud IP
(86) International application number: PCT/KR2023/001250
(87) International publication number: WO 2023/146331

(56) References cited:
- DE-A1- 102018 221 843
- KR-A- 20160 087 220
- KR-A- 20170 044 941
- KR-A- 20170 050 999
- KR-A- 20170 101 857
- KR-A- 20180 085 942

## Description

### [TECHNICAL FIELD]

The present disclosure relates to a battery cell and a manufacturing method thereof, and more particularly, to a battery cell in which cracking of the electrode tab is prevented, and a manufacturing method thereof.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

The secondary battery may be classified based on the shape of a battery case into a cylindrical or prismatic battery wherein an electrode assembly is mounted in a cylindrical or prismatic metal can, and a pouch-type battery in which the electrode assembly is mounted in a pouch-shaped case made of an aluminum laminate sheet.

Further, the secondary battery may be classified based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet type positive electrodes and long sheet type negative electrodes are rolled with a separator being interposed between the positive electrode and the negative electrode, a stacked (laminated) type structure in which pluralities of positive electrodes and negative electrodes, cut into predetermined unit sizes, are sequentially stacked with separators being interposed between the positive electrodes and the negative electrodes, or the like.

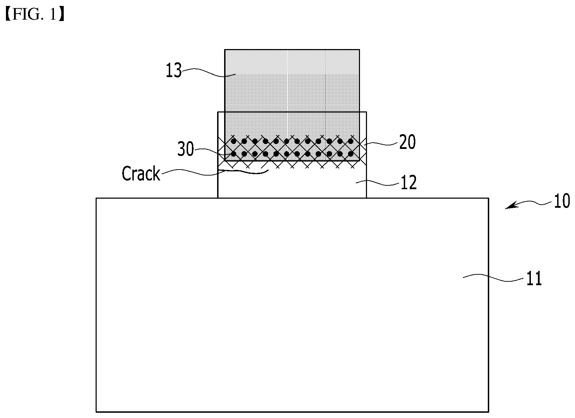

FIG. 1 is a diagram showing electrode tabs and electrode leads included in a conventional battery cell.

Referring to FIG. 1, the battery cell 10 may be a pouch-type battery in which a stacked type electrode assembly is housed in a cell case. The battery cell 10 includes a stacked body 11 including a positive electrode, a negative electrode, and a separator interposed between the positive electrode and the negative electrode, an electrode tab 12 extending from the positive electrode or the negative electrode and an electrode lead 13 connected to the electrode tab 12.

In the pouch type battery, a plurality of electrode tabs 12 extending from each electrode of the stacked body 11 are pre-welded by a welding device, gathered at one point, and then can be connected to the electrode lead 13. Here, a welding portion connecting the plurality of electrode tabs 12 may be referred to as a pre-welding portion 20, and a welding portion connecting the electrode tab 12 and the electrode lead 13 can be referred to as a main welding portion 30. After that, the stacked body 11, the electrode tab 12, and the electrode lead 13 are mounted in a cell case and manufactured as a battery cell 10, wherein the electrode lead 13 may be disposed so that one end protrudes to the outside of the cell case in order to be connected to the external busbar.

Meanwhile, when the battery cell 10 is mounted on a module or pack, the electrode lead 13 and the busbar are also connected through a welding process. However, when high energy is applied to the electrode lead 13 according to the welding conditions, a problem arises that the electrode lead 13 and the electrode tab 12 inside the battery cell 10 are separated. Further, for the purpose of strengthening the welding conditions of the main welding portion 30 during manufacture of the battery cell 10 to prevent the separation between the electrode lead 13 and the electrode tab 12, if the welding energy or pressing force applied to the electrode tab 12 becomes excessive, there is a problem that cracks are generated in the electrode tab 12 or an already formed crack may grow.

### [DETAILED DESCRIPTION OF THE INVENTION]

### [Technical Problem]

It is an object of the present disclosure to provide a battery cell which reduces the risk of disconnection of electrode tabs, and a manufacturing method thereof.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery cell comprising: a stacked body including a positive electrode, a negative electrode, and a separator interposed between the positive electrode and the negative electrode, an electrode tab extending from the positive electrode or the negative electrode of the stacked body, and an electrode lead coupled with the electrode tab, wherein the electrode tabs are formed with a pre-welding portion connecting respective electrode tabs and a main welding portion coupling the electrode tab and the electrode lead, wherein the pre-welding portion includes an inner side edge and an outer side edge, wherein at least one of the welding spots of the main welding portion overlaps an inner side edge of the pre-welding portion, and wherein an inner side edge of the pre-welding portion is disposed closer to the stacked body than an outer side edge of the pre-welding portion in the longitudinal direction of the electrode tab.

The main welding portion includes a first welding line, a second welding line, and a third welding line which are arranged side by side with each other; and the first welding line is disposed between the second welding line and the third welding line, the second welding line overlaps the pre-welding portion, and the third welding line may not overlap the pre-welding portion.

The second welding line forms an edge of the main welding portion, and an outer side edge of the pre-welding portion is located outside the second welding line in a direction getting away from the stacked body based on the longitudinal direction of the electrode tab.

The third welding line may be located outside the inner side edge of the pre-welding portion in a direction closer to the stacked body based on the longitudinal direction of the electrode tab.

At least one of the welding spots of the main welding portion may be located inside the pre-welding portion.

The pre-welding portion may be formed to be spaced apart from an edge of the electrode tab in the width direction of the electrode tab.

A length of the electrode tab of the pre-welding portion in a width direction may be smaller than a width of the electrode tab.

A part of the main welding portion may be formed outside an edge of the electrode tab of the pre-welding portion in a width direction.

The pre-welding portion may be formed in a pyramidal pattern.

The pre-welding portion may be formed in a straight line pattern.

A corner portion of the electrode lead may be formed in a round shape.

The electrode lead is located on one surface of the electrode tab, and a back face plate may be located on the other surface of the electrode tab facing one surface of the electrode tab.

An additional welding portion may be formed between the back face plate and the electrode tab.

According to another embodiment of the present disclosure, there is provided a battery cell comprising: a stacked body including a positive electrode, a negative electrode, and a separator interposed between the positive electrode and the negative electrode, an electrode tab extending from the positive electrode or the negative electrode of the stacked body, and a pre-welding portion which connects each electrode tab to the electrode tab to form a tab bundle, wherein the pre-welding portion is formed to be spaced apart from an edge of the electrode tab in the width direction of the electrode tab.

The battery cell of claim further comprises an electrode lead coupled with the electrode tab, and a main welding portion that couples the electrode tab and the electrode lead, wherein the pre-welding portion includes an inner side edge and an outer side edge, and wherein at least one of the welding spots of the main welding portion may overlap an inner side edge of the pre-welding portion.

According to yet another embodiment of the present disclosure, there is provided a method for manufacturing a battery cell, comprising the steps of: forming a stacked body including a positive electrode, a negative electrode, and a separator interposed between the positive electrode and the negative electrode, forming a pre-welding portion on an electrode tab extending from the positive electrode or the negative electrode, and forming a main welding portion for connecting an electrode lead to one surface of the electrode tab, wherein at least a part of the pre-welding portion and the main welding portion overlap each other, and the main welding portion is located closer to the stacked body than the pre-welding portion in the longitudinal direction of the electrode tab.

The method may further comprise a step of removing the non-welded electrode tab, after the step of forming the pre-welding portion.

The method may further comprise a step of forming a corner portion of the electrode lead in a round shape, before the step of forming a main welding portion.

The step of forming a main welding portion may comprise a step of arranging an electrode lead on one surface of an electrode tab and a step of arranging the back face plate on the other surface of the electrode tab.

### [Advantageous Effects]

According to the embodiments, the position and size of the welding portion formed on the electrode lead and the electrode tab are adjusted during manufacture of the battery cell of the present disclosure, thereby capable of reducing the risk of disconnection of the electrode tab.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a diagram showing electrode tabs and electrode leads included in a conventional battery cell;
FIG. 2 is a diagram showing an electrode tab and an electrode lead included in a battery cell according to one embodiment of the present disclosure;
FIG. 3 is a partially enlarged view of an area A of FIG. 2;
FIG. 4 is a diagram for explaining stress that may occur in an electrode tab;
FIG. 5 is a diagram for explaining a change in stress according to the size and position of a pre-welding portion formed on an electrode tab;
FIG. 6 is examples of pre-welding portions formed on the electrode tab of FIG. 2;
FIG. 7 is a diagram showing a process of forming a corner portion of the electrode lead of FIG. 2; and
FIG. 8 is a diagram showing an example in which a back face plate is provided to the battery cell of FIG. 2.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

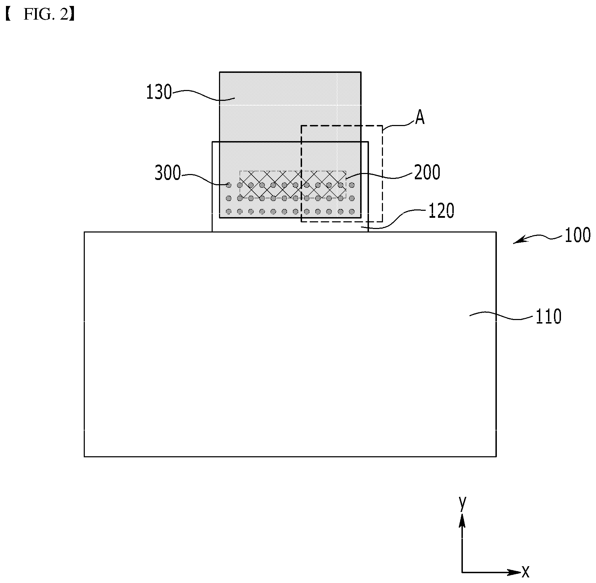

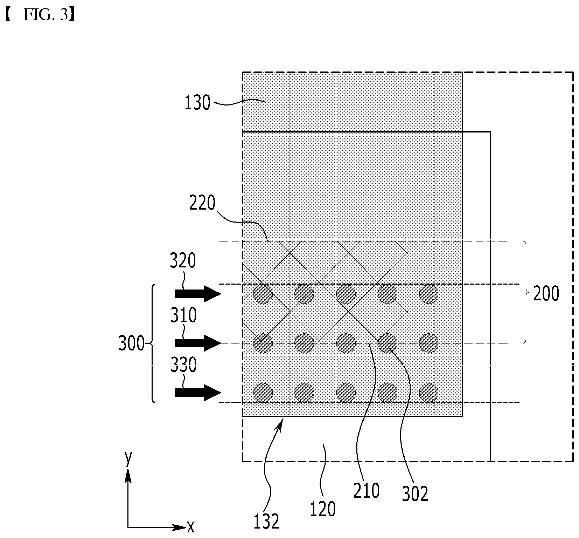

FIG. 2 is a diagram showing an electrode tab and an electrode lead included in a battery cell according to one embodiment of the present disclosure. FIG. 3 is a partially enlarged view of an area A of FIG. 2.

Referring to FIGS. 2 and 3, the electrode assembly 100 of the present embodiment may include a stacked body 110 including a positive electrode, a negative electrode, and a separator interposed between the positive electrode and the negative electrode, an electrode tab 120 extending from the positive electrode or the negative electrode of the stacked body 110 and an electrode lead 130 coupled with electrode tab 120. The stacked body 110, the electrode tab 120 and the electrode lead 130 can be sealed in a cell case together with an electrolyte solution in a state where one end of the electrode lead 130 protrudes, and produced into a battery cell 100. FIGS. 2 and 3 show the battery cell 100 in a state where the cell case is omitted.

The stacked body 110 may be a chargeable/dischargeable power generation device. The electrodes included in the stacked body 110 may include a positive electrode and a negative electrode, and a separator is interposed between respective electrodes, whereby the stacked body 110 can have a structure in which a positive electrode / separator / negative electrode are alternately stacked. The positive electrode or the negative electrode may be an electrode in which a positive electrode active material or a negative electrode active material is applied onto a current collector, and the separator may be made of an insulating material to electrically insulate between the positive electrode and the negative electrode

Further, the stacked body 110 may have a structure in which mono-cells formed by stacking separator/positive electrode/separator/negative electrode or separator/negative electrode /separator/ positive electrode from the bottom are manufactured into unit cells and stacked by a plurality of numbers, but half-cells stacked in the order of separator/negative electrode /separator or separator/positive electrode/separator are stacked on the outermost shell.

The electrode tabs 120 may be located at one end of the stacked body 110 or at one end of an electrode included in the stacked body 110. The electrode tab 120 may be a portion that extends in one direction or in both directions from each electrode. The electrode tab 120 may be a portion on which an electrode active material is not applied. Among the electrode tabs 120, the electrode tab 120 connected to the positive electrode may be referred to as a positive electrode tab, and the electrode tab 120 connected to the negative electrode may be referred to as a negative electrode tab. At this time, the positive electrode tab may be located at one end of the stacked body 110 and the negative electrode tab may be located at the other end of the stacked body 110.

The electrode lead 130 may be for forming an electrical connection between the stacked body 110 within the cell case and an external member of the cell case. One end of the electrode lead 130 may be pulled out of the cell case, and the other end of the electrode lead 130 may be coupled with the electrode tab 120 inside the cell case. Here, the electrode lead 130 and the electrode tab 120 may be coupled by welding.

Meanwhile, the plurality of electrode tabs 120 extending from the electrode may be coupled to each other by a welding device to form an electrode tab bundle, before being connected to the electrode lead 130. The electrode tabs 120 may be formed with a pre-welding portion 200 for coupling the plurality of electrode tabs 120. The pre-welding portion 200 may be formed by joining a plurality of electrode tabs 120 through a welding device. The plurality of electrode tabs 120 may be concentrated at one point by being pressed by a tab guide or the like, and may be coupled in a liquid state or a solid state by a welding device. A welding device used to form the pre-welding portion 200 may be a device using an ultrasonic welding method. At this time, the welding device may include a horn, anvil, and/or an actuator that vibrates the horn, and the electrode tabs 120, which are workpieces, can be inserted between the horn and the anvil and then coupled to each other through ultrasonic welding.

Further, for coupling of the electrode tab 120 and the electrode lead 130, the main welding portion 300 may be formed on the electrode tab 120 and the electrode lead 130. The main welding portion 300 may be formed through a welding device. The electrode tab 120 and the electrode lead 130 may be partially heated by the welding device, and the heated portions can be joined to couple with each other. A welding device used to form the main welding portion 300 may be a device using a laser welding method. In the case of using the laser welding method, the main welding portion 300 may include a plurality of welding spots 302 formed by the irradiated laser.

Here, it has been described that the laser welding method is used to form the main welding portion 300 and used to form the pre-welding portion 200 with the ultrasonic welding method, but this is not necessarily the case, and laser welding can be used to form the pre-welding portion 200 or that ultrasonic welding can be used to form the main welding portion 300.

Referring to FIGS. 2 and 3 again, at least a part of the pre-welding portion 200 and the main welding portion 300 formed on one surface of the electrode tab 120 may overlap each other. The main welding portion 300 may be formed outside the pre-welding portion 200 in the width direction (X-axis direction) of the electrode tab 120 and/or in the length direction (Y-axis direction) of the electrode tab 120. Further, the area occupied by the pre-welding portion 200 may include an area where the main welding portion 300 is not formed in an outer portion.

At least one of the welding spots 302 included in the main welding portion 300 overlaps an edge located on one side of the pre-welding portion 200. At least one of the welding spots 302 included in the main welding portion 300 overlaps the inner side edge 210 of the pre-welding portion 200. Here, the inner side edge 210 is a portion located relatively closer to the stacked body 110 than the outer side edge 220 described later among the area of the pre-welding portion 200.

Specifically, the pre-welding portion 200 includes an inner side edge 210 and an outer side edge 220, and at least one of the welding spots 302 of the main welding portion 300 overlaps the inner side edge 210 of the pre-welding portion 200. At this time, the inner side edge 210 of the pre-welding portion 200 is located closer to the stacked body 110 than the outer side edge 220 of the pre-welding portion 200 in the longitudinal direction of the electrode tab.

According to the present embodiment, the main welding portion 300 may include a first welding line 310, a second welding line 320, and a third welding line 330 which are arranged by side with each other, as shown in FIG. 3. Each of the first welding line 310, the second welding line 320, and the third welding line 330 may include those in which the welding spots 302 of the main welding portion 300 are arranged by a plurality of numbers in the width direction (X-axis direction) of the tab electrode 120.

In FIG. 3, one second welding line 320 and one third welding line 330 are shown, but each of the second welding line 320 and the third welding line 330 is formed in two or more numbers. The first welding line 310 is arranged between the second welding line 320 and the third welding line 330, and the second welding line 320 overlaps the pre-welding portion 200, and the third welding line 330 does not overlap the pre-welding portion 200.

The second welding line 320 forms an edge of the main welding portion 300, and the outer side edge 220 of the pre-welding portion may be located outside the second welding line 320 in a direction getting away from the stacked body 110 based on the longitudinal direction (Y-axis direction) of the electrode tab 120. In addition, the third welding line 320 may be located outside the inner side edge 210 of the pre-welding portion 200 in a direction closer to the laminate 110 based on the longitudinal direction (Y-axis direction) of the electrode tab 120.

As shown in FIG. 1, cracks may occur in the electrode tab 120 during formation of the main welding portion 300. The welding spot 302 is formed on the inner side edge 210 of the pre-welding portion 200 as in the present embodiment, so that formation of cracks occurring at the inner side edge 210 of the pre-welding portion 200 or propagation of the formed cracks may be minimized. The inner side edge 210 of the pre-welding portion 200 may correspond to a point at which a crack starts during formation of the main welding portion 300.

Here, the inner side of the electrode tab 120 is a direction from the electrode tab 120 toward the stacked body 110 (-Y axis direction), and may be a direction toward the inside of the cell case based on the longitudinal direction of the battery cell 100. Further, the outer side may be a direction from the electrode tab 120 toward the electrode lead 130, and may be a direction toward the outside of the cell case in the longitudinal direction of the battery cell 100.

In the electrode tab 120, the main welding portion 300 may be located inside the pre-welding portion 200. An edge located on one side of the pre-welding portion 200 may be located in the main welding portion 300. The inner side edge 210 of the pre-welding portion 200 may be located overlapping the main welding portion 300. The main welding portion 300 may be located closer to the stacked body 110 than the pre-welding portion 200 in the longitudinal direction of the electrode tab 120. One or more of the welding spots 302 included in the main welding portion 300 may be located closer to the stacked body 110 than the pre-welding portion 200. When the main welding portion 300 is formed extending to the inside of the pre-welding portion 200 in this way, a mechanistic restraint region is formed around the inner side edge 210 of the pre-welding portion 200 by welding the main welding portion 300, and the formation of cracks occurring in that area is a welding spot 302 of the main welding portion 300. Further, when the main welding portion 300 is formed, the inner side edge 210 of the pre-welding portion 200 may be re-melted to remove cracks.

Further, as described later, the electrode tab 120 receives a tensile force by volume expansion due to cell swelling that occurs during the manufacturing process or during battery cell operation, which causes contraction due to stress. Some of the welding spots 302 included in the main welding portion 300 are formed inside the pre-welding portion 200, thereby supplementing the stiffness of the electrode tab 120 and preventing damage to the electrode tab 120 due to tension and stress.

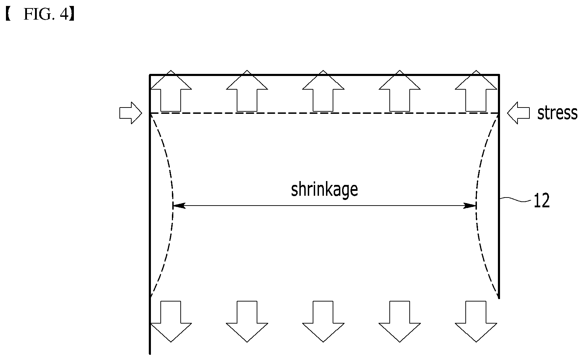

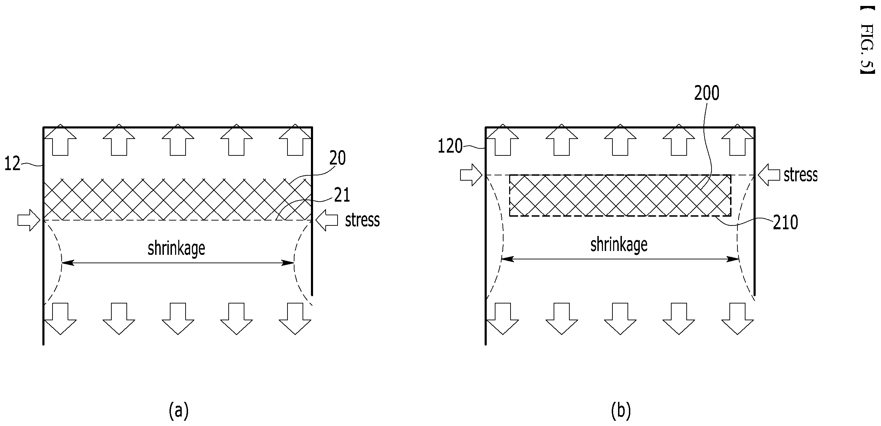

Referring back to FIGS. 2 and 3, according to another embodiment of the present disclosure, the pre-welding portion 200 formed on one surface of the electrode tab 120 may be formed to be spaced apart from the edge of the electrode tab 120 in the width direction of the electrode tab 120. Alternatively, the length of the electrode tab 120 of the pre-welding portion 200 in the width direction may be smaller than the width of the electrode tab 120. This will be described in more detail with reference to FIGS. 4 and 5.

FIG. 4 is a diagram for explaining stress that may occur in an electrode tab. FIG. 5 is a diagram for explaining a change in stress according to the size and position of a pre-welding portion formed on an electrode tab. Here, tension means pulling the electrode tab toward both ends in the longitudinal direction, and the tensile direction in FIGS. 4 and 5 is shown by arrows pointing up and down. Further, the stress according to the tension is shown by arrows pointing left and right in FIGS. 4 and 5.

Referring to FIG. 4, the width direction contraction may occur in the electrode tab 12 in response to stress caused during tension of the electrode tab 12. However, as shown in FIG. 5, when the pre-welding portion 20 is formed on the electrode tab 12, the stress and the contraction mode resulting therefrom may vary slightly. As shown in FIG. 5(a), in the conventional electrode tab 12 in which the pre-welding portion 200 is formed up to the edge of the electrode tab 12 in the width direction, the pre-welding portion 200 fixes a partial length section of the electrode tab 12 as a whole. Thus, a mode appeared in which the stress is concentrated around the inner side edge 21 of the pre-welded portion 20 during tension of the electrode tab 12. When the stress is concentrated on the inner side edge 21 of the pre-welding portion 20 in this way, there is a problem that cracks are easily formed around the inner side edge 21 of the pre-welded portion 20 or small cracks can grow larger.

Meanwhile, in the present embodiment, the pre-welding portion 200 may be formed to be spaced apart from the edge of the electrode tab 120 in the width direction of the electrode tab 120 in order to solve the above problem. Specifically, as shown in FIG. 5(b), a part of the main welding portion 300 may be formed outside the edge in the width direction (X-axis direction) of the electrode tab 120 of the pre-welding portion 200. In one example, as shown in FIG. 3, the welding spot 302 of the main welding portion 300 may be formed outside the edge of the pre-welding portion 200.

As shown in FIG. 5(b), when the pre-welding portion 200 is formed to be spaced apart from the edge of the electrode tab 120 in the width direction of the electrode tab 120, the pre-welding portion 200 partially fixes a partial length section of the electrode tab 120, so that contraction due to stress during tension of the electrode tab 120 may not be concentrated on the inner side edge 210 of the pre-welding portion 200. Contraction of the electrode tab 120 in response to stress may be caused in a wider range including the pre-welding portion 200, whereby cracks may be generated around the inner side edge 210 or growth mode of cracks may be minimized. Therefore, since the pre-welding portion 200 is formed as in the present embodiment, the occurrence or growth of cracks that may occur in the electrode tab 120 can be alleviated.

**In** the embodiment described with reference to FIGS. 2 and 3, an embodiment in which the pre-welding portion 200 is formed to be spaced apart from the edge of the electrode tab 120 in the width direction, and an embodiment in which at least a part of the pre-welding portion 200 and the main welding portion 300 overlap each other are shown in the same figure, but are not limited thereto, and an embodiment in which the pre-welding portion 200 described in FIGS. 4 and 5 is formed to be spaced apart from the edge of the electrode tab 120 in the width direction can be implemented without being limited to the specific structure of the main welding portion 300.

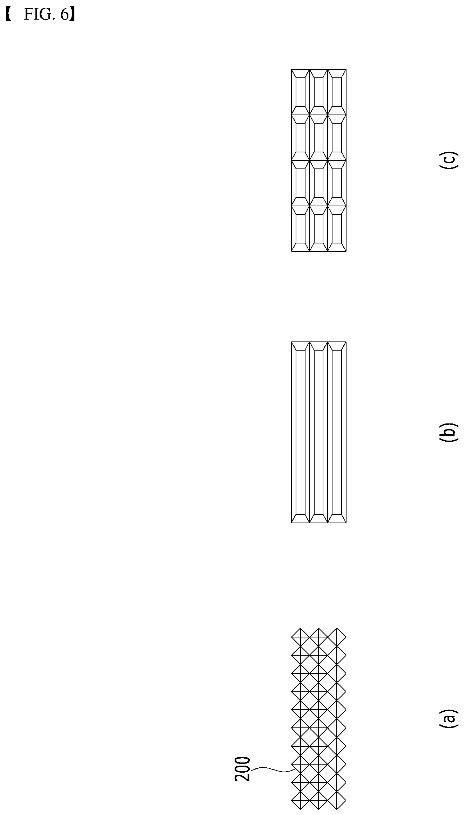

FIG. 6 is examples of pre-welding portions formed on the electrode tab of FIG. 2.

Referring to FIG. 6, the pre-welding portion 200 of the present embodiment may be formed in various patterns. The pattern of the pre-welding portion 200 may vary depending on the specification of the horn included in the welding device. The pattern of the pre-welding portion 200 may vary depending on the knurl pattern of the horn.

For example, the pattern of the pre-welding portion 200 may be formed in a pyramid shape as shown in FIG. 6 (a), or may be formed in a straight line shape or a window shape as shown in FIGS. 6(b) and 6(c). In the case of a pyramid shape as shown in FIG. 6(a), the pressing force applied to the electrode tab 120 per knurl may be larger than that of a straight line shape as shown in FIGS. 6(b) and 6(c), which may damage the electrode tab 120. Therefore, in order to disperse the pressing force applied to the electrode tab 120, it may be preferable to form a straight line shape as shown in FIG. 6(b) or FIG. 6(c).

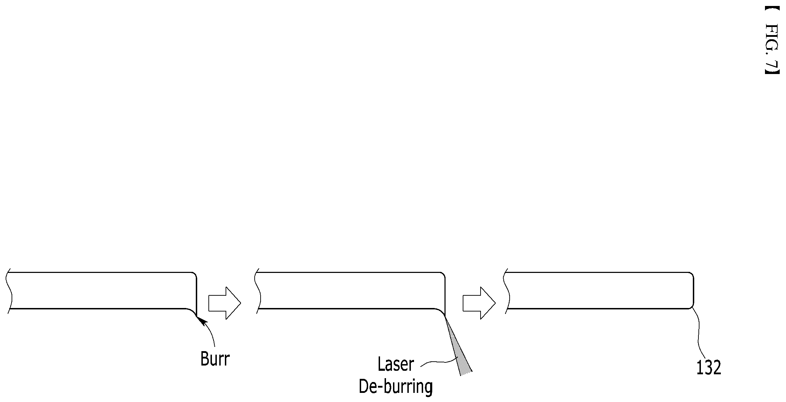

FIG. 7 is a diagram showing a process of forming a corner portion of the electrode lead of FIG. 2.

Referring to FIG. 7, the corner portion 132 of the electrode lead 130 according to this embodiment may have a round shape. The corner portion 132 of the electrode lead 130 may come into contact with the electrode tab 120 in the process of manufacturing or using the battery cell 100. However, if a burr is formed on the corner portion 132, the electrode tab 120 may be pierces and damaged. Therefore, in order to prevent disconnection of the electrode tab 120, it may be desirable to process the corner portion 132 of the electrode lead 130 to have a round shape. In order to remove the burr formed on the corner portion 132, a laser device can be used as shown in FIG. 7.

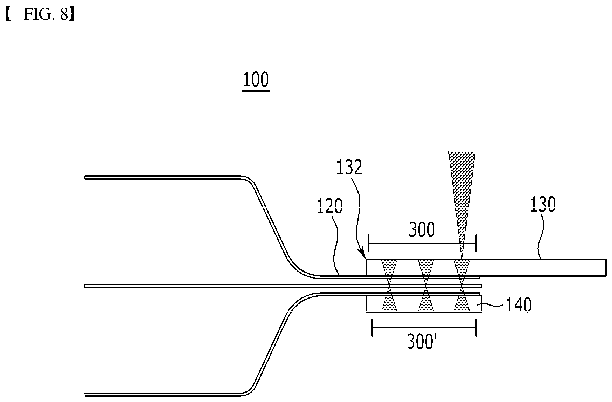

FIG. 8 is a diagram showing an example in which a back face plate is provided to the battery cell of FIG. 2.

Referring to FIG. 8, the battery cell 100 of this embodiment may be provided with a back face plate 140. The back face plate 140 may be provided on one surface of the electrode tab 120. The back face plate 140 may be located so as to face the electrode lead 130 with the electrode tab 120 interposed therebetween. By adding the back face plate 140 to one surface of the electrode tab 120, disconnection during welding can be prevented and the pressing force transmitted to the electrode tab 120 can be dispersed. In addition, the resistance to the tension of the electrode tab 120 and stress resulting therefrom that may occur on the manufacturing process can be enhanced by the back face plate 140.

Therefore, the main welding portion 300 of the battery cell 100 of this embodiment may be formed by disposing the electrode lead 130 on one surface of the electrode tab 120, and disposing a back face plate 140 on the other surface facing the one surface of the electrode tab 120, and coupling the electrode lead 130, the electrode tab 120, and the back face plate 140 using a welding device. At this time, the battery cell 100 according to the present embodiment may include an additional welding portion 300' formed between the back face plate 140 and the electrode tab 120. The additional welding portion 300' may be a welding portion formed between the back face plate 140 and the electrode tab 120 by adding the back face plate 140 to reinforce the weld portion of the main welding portion 300 when forming the main welding portion 300 between the electrode tab 120 and the electrode lead 130. The additional welding portion 300' reinforces the welding strength between the electrode tabs 120 and between the electrode tab 120 and the electrode lead 130, thereby strengthening the bond of the electrode tab 120 and the bond between the electrode tab 120 and the electrode lead 130 and withstanding shear forces.

At this time, the area of the additional welding portion 300' may overlap the main welding portion 300, and the area of the additional welding portion 300' may be substantially the same as the area of the main welding portion 300. In order to make the area of the additional welding portion 300' substantially identical to the area of the main welding portion 300, the back face plate 140 may have the area identical to the area where the electrode lead 130 overlaps the electrode tab 120. Further, the back face plate 140 may be formed using the same material as the electrode lead 130, for example, aluminum or copper.

Hereinafter, a method for manufacturing a battery cell according to another embodiment of the present disclosure will be described. The manufacturing method described below includes all the contents of the above-described embodiment, and the contents similar to the above-described embodiment will be omitted to avoid redundant description. Further, in describing the manufacturing method of the battery cell according to the present embodiment, symbols such as S100 are only marked to distinguish each step, and are not shown in the drawings.

The manufacturing method S100 of the battery cell according to the present embodiment may include a step S110 of forming a stacked body 110 including a positive electrode, a negative electrode, and a separator interposed between the positive electrode and the negative electrode, a step S120 of forming a pre-welding portion 200 on an electrode tab 120 extending from the positive electrode or the negative electrode, and a step S130 of forming a main welding portion 300 for connecting an electrode tab 120 and an electrode lead 130 to one surface of the electrode tab 120.

The step S110 of forming the stacked body 110 can be explained through a known method of forming a stacked electrode assembly. For example, the stacked body 110 may be formed by stacking a plurality of mono-cells and stacking a half cell on the outermost part of the stacked mono-cells.

The step S120 of forming the pre-welding portion 200 can be for forming connections between the plurality of electrode tabs 120. The ultrasonic welding can be used for forming the pre-welding portion 200 as described above, and forming the pre-welding portion 200 by other known welding methods such as resistance welding.

Here, the pre-welding portion 200 may be formed to be spaced apart from the edge of the electrode tab 120 in the width direction, as described in FIGS. 2 to 5. Further, the pre-welding portion 200 may be formed in various patterns as described in FIG. 6.

Meanwhile, when the non-welded section remains on the electrode tab 120, the main welding portion 300 may need to be formed larger when the electrode lead 130 and the electrode tab 120 are coupled. Therefore, the manufacturing method S100 of the battery cell according to the present embodiment may comprise a step of removing the non-welded electrode tab 120 after the step S120 of forming the pre-welding portion 200 and before the step S130 of forming the main welding portion 300. The non-welded section may be removed from the electrode tab 120 by cutting around the outer side edge of the pre-welding portion 200. At this time, the cutting position may be a position spaced apart by a predetermined distance from the outer side edge of the pre-welding portion 200 to the inside. In this way, the step of cutting the non-welded electrode tab 120 prevents the non-welded contact from being located at the outer end of the electrode tab 120, so that an outer end of the electrode tab 120 can be welded. Accordingly, the size of the main welding portion 300 or the number of welding spots 302 can be reduced.

The step S130 of forming a main welding portion 300 can be for forming the connection between the electrode tab 120 and the electrode lead 130. Laser welding may be used to form the main welding portion 300 as described above, but the main welding portion 300 can be formed by other known welding methods such as resistance welding. Further, although not specifically shown in the figure, a lead film can be attached to one surface of the electrode lead 130, and the lead film can be for forming adhesion between the cell case and the electrode lead 130 or for preventing damage to the cell case.

Here, the corner portion 132 of the electrode lead 130 may be processed to have a round shape as described in FIG. 7. Therefore, the manufacturing method S100 of the battery cell of this embodiment may further include a step of forming the corner portion 132 of the electrode lead 130 into a round shape, before the step S130 of forming the main welding portion 300.

Further, the back face plate 140 herein can be provided on the electrode tab 120 as described in FIG. 8. Therefore, the step S130 of forming the main welding portion 300 can be embodied by way of a step of arranging so that at least part of one surface of the electrode lead 130 overlaps one surface of the electrode tab 120, a step of arranging the back face plate 140 on the other surface of the electrode tab 120, and a step of coupling the electrode tab 120, the electrode lead 130 and the back plate 140 with a welding device. At this time, an additional welding portion 300' may be formed between the back face plate 140 and the electrode tab 120.

Meanwhile, the battery cells described above can be stacked in one direction to form a battery cell stack, and can be housed inside a module case that houses the battery cell stack to be modularized into a battery module. Further, the battery module can be combined together with a battery management system (BMS) and/or a cooling device that control and manages the battery's temperature, voltage and the like to form a battery pack. The battery pack can be applied to various devices. For example, the device to which the battery pack is applied may be a vehicle means such as an electric bicycle, an electric vehicle, or a hybrid vehicle, but the present disclosure is not limited thereto, and the battery pack according to the present embodiment can be used for various devices in addition to the above illustrations, which also falls within the scope of the present disclosure.

Although the invention has been described in detail above with reference to preferred embodiments thereof, the scope of the present disclosure is not limited thereto, and various modifications and improvements can be made by those skilled in the art within the scope of the invention which is defined by the appended claims.

### [Description of Reference Numerals]

100: battery cell
110: stacked body
120: electrode tab
130: electrode lead
140: back face plate
200: pre-welding portion
210: inner side edge
220: outer side edge
300: main welding portion
300': additional welding portion
310, 320, 330: first, second, third welding lines

## Claims

1. A battery cell (100) comprising:
a stacked body (110) including a positive electrode, a negative electrode, and a separator interposed between the positive electrode and the negative electrode,
an electrode tab (120) extending from the positive electrode or the negative electrode of the stacked body, and
an electrode lead (130) coupled with the electrode tab (120),
wherein the electrode tabs (120) are formed with a pre-welding portion (200) connecting respective electrode tabs (120) and a main welding portion (300) coupling the electrode tab (120) and the electrode lead (130),
wherein the pre-welding portion (200) includes an inner side edge (210) and an outer side edge (220),
wherein at least one of the welding spots (302) of the main welding portion (300) overlaps an inner side edge (210) of the pre-welding portion (200), and
wherein an inner side edge (210) of the pre-welding portion (200) is disposed closer to the stacked body (110) than an outer side edge (220) of the pre-welding portion (200) in the longitudinal (y) direction of the electrode tab (120).

2. The battery cell (100) of claim 1, wherein:
the main welding portion (200) includes a first welding line (310), a second welding line (320), and a third welding line (330) which are arranged side by side with each other, and
the first welding line (310) is disposed between the second welding line (320) and the third welding line (330), the second welding line (320) overlaps the pre-welding portion (200), and the third welding line (330) does not overlap the pre-welding portion (200).

3. The battery cell of claim 2, wherein:
the second welding line forms an edge of the main welding portion, and
an outer side edge of the pre-welding portion is located outside the second welding line in a direction getting away from the stacked body based on the longitudinal direction of the electrode tab.

4. The battery cell of claim 2, wherein:
the third welding line is located outside the inner side edge of the pre-welding portion in a direction closer to the stacked body based on the longitudinal direction of the electrode tab.

5. The battery cell (100) of claim 1, wherein:
at least one of the welding spots (302) of the main welding portion (200) is located inside the pre-welding portion (200).

6. The battery cell (100) of claim 1, wherein:
the pre-welding portion (200) is formed to be spaced apart from an edge of the electrode tab (120) in the width direction (x) of the electrode tab (120).

7. The battery cell (100) of claim 6, wherein:
a length of the electrode tab (120) of the pre-welding portion (200) in the width direction is smaller than a width of the electrode tab (120).

8. The battery cell (100) of claim 6, wherein:
a part of the main welding portion (300) is formed outside an edge of the electrode tab (120) of the pre-welding portion (200) in the width direction.

9. The battery cell (100) of claim 1, wherein:
a corner portion of the electrode lead (130) is formed in a round shape.

10. The battery cell (100) of claim 1, wherein:
the electrode lead (130) is located on one surface of the electrode tab (120), and
a back face plate (140) is located on the other surface of the electrode tab (120) facing one surface of the electrode tab (120).

11. The battery cell (100) of claim 10, wherein:
an additional welding portion (300') is formed between the back face plate (140) and the electrode tab (120).

12. A method for manufacturing a battery cell (100), comprising the steps of:
forming a stacked body (110) including a positive electrode, a negative electrode, and a separator interposed between the positive electrode and the negative electrode,
forming a pre-welding portion (200) on an electrode tab (120) extending from the positive electrode or the negative electrode, and
forming a main welding portion (300) for connecting an electrode lead (130) to one surface of the electrode tab (130),
wherein at least a part of the pre-welding portion (200) and the main welding portion (300) overlap each other, and
the main welding portion (300) is located closer to the stacked body (110) than the pre-welding portion (200) in the longitudinal direction of the electrode tab (120).

13. The method of claim 12,
further comprising a step of removing the non-welded electrode tab, after the step of forming the pre-welding portion (200).

14. The method of claim 12,
further comprising a step of forming a corner portion of the electrode lead (130) in a round shape, before the step of forming a main welding portion (300).

15. The method of claim 12, wherein:
the step of forming a main welding portion (300) further comprises a step of arranging an electrode lead (130) on one surface of an electrode tab (120) and a step of arranging the back face plate (140) on the other surface of the electrode tab (120).

## Patentansprüche

1. Batteriezelle (100), umfassend:
einen Stapelkörper (110), der eine positive Elektrode, eine negative Elektrode und einen Separator aufweist, der zwischen der positiven Elektrode und der negativen Elektrode angeordnet ist,
eine Elektrodenfahne (120), die sich von der positiven Elektrode oder der negativen Elektrode des Stapelkörpers erstreckt, und
einen Elektrodenleiter (130), der mit der Elektrodenfahne (120) gekoppelt ist,
wobei die Elektrodenfahnen (120) mit einem Vorverschweißungsabschnitt (200), der jeweilige Elektrodenfahnen (120) verbindet, und einem Hauptverschweißungsabschnitt (300), der die Elektrodenfahne (120) und den Elektrodenleiter (130) koppelt, ausgebildet sind,
wobei der Vorverschweißungsabschnitt (200) einen inneren Seitenrand (210) und einen äußeren Seitenrand (220) aufweist,
wobei mindestens einer der Schweißpunkte (302) des Hauptverschweißungsabschnitts (300) einen inneren Seitenrand (210) des Vorverschweißungsabschnitts (200) überlappt, und
wobei ein innerer Seitenrand (210) des Vorverschweißungsabschnitts (200) in der Längsrichtung (y) der Elektrodenfahne (120) näher an dem Stapelkörper (110) angeordnet ist als ein äußerer Seitenrand (220) des Vorverschweißungsabschnitts (200).

2. Batteriezelle (100) nach Anspruch 1, wobei:
der Hauptverschweißungsabschnitt (200) eine erste Schweißlinie (310), eine zweite Schweißlinie (320) und eine dritte Schweißlinie (330) aufweist, die nebeneinander angeordnet sind, und
die erste Schweißlinie (310) zwischen der zweiten Schweißlinie (320) und der dritten Schweißlinie (330) angeordnet ist, die zweite Schweißlinie (320) den Vorverschweißungsabschnitt (200) überlappt, und die dritte Schweißlinie (330) den Vorverschweißungsabschnitt (200) nicht überlappt.

3. Batteriezelle nach Anspruch 2, wobei:
die zweite Schweißlinie einen Rand des Hauptverschweißungsabschnitts bildet, und
ein äußerer Seitenrand des Vorverschweißungsabschnitts außerhalb der zweiten Schweißlinie in einer Richtung weg von dem Stapelkörper basierend auf der Längsrichtung der Elektrodenfahne angeordnet ist.

4. Batteriezelle nach Anspruch 2, wobei:
die dritte Schweißlinie außerhalb des inneren Seitenrands des Vorverschweißungsabschnitts in einer Richtung näher an dem Stapelkörper basierend auf der Längsrichtung der Elektrodenfahne angeordnet ist.

5. Batteriezelle (100) nach Anspruch 1, wobei:
mindestens einer der Schweißpunkte (302) des Hauptverschweißungsabschnitts (300) innerhalb des Vorverschweißungsabschnitts (200) angeordnet ist.

6. Batteriezelle (100) nach Anspruch 1, wobei:
der Vorverschweißungsabschnitt (200) so ausgebildet ist, dass er von einem Rand der Elektrodenfahne (120) in der Breitenrichtung (x) der Elektrodenfahne (120) beabstandet ist.

7. Batteriezelle (100) nach Anspruch 6, wobei:
eine Länge der Elektrodenfahne (120) des Vorverschweißungsabschnitts (200) in der Breitenrichtung kleiner ist als eine Breite der Elektrodenfahne (120).

8. Batteriezelle (100) nach Anspruch 6, wobei:
ein Teil des Hauptverschweißungsabschnitts (300) außerhalb eines Rands der Elektrodenfahne (120) des Vorverschweißungsabschnitts (200) in der Breitenrichtung ausgebildet ist.

9. Batteriezelle (100) nach Anspruch 1, wobei:
ein Eckabschnitt des Elektrodenleiters (130) in einer runden Form ausgebildet ist.

10. Batteriezelle (100) nach Anspruch 1, wobei:
der Elektrodenleiter (130) auf einer Oberfläche der Elektrodenfahne (120) angeordnet ist, und
eine Rückseitenplatte (140) auf der anderen Oberfläche der Elektrodenfahne (120) angeordnet ist, die der einen Oberfläche der Elektrodenfahne (120) zugewandt ist.

11. Batteriezelle (100) nach Anspruch 10, wobei:
ein zusätzlicher Verschweißungsabschnitt (300') zwischen der Rückseitenplatte (140) und der Elektrodenfahne (120) ausgebildet ist.

12. Verfahren zur Herstellung einer Batteriezelle (100), umfassend die Schritte:
Formen eines Stapelkörpers (110), der eine positive Elektrode, eine negative Elektrode und einen Separator aufweist, der zwischen der positiven Elektrode und der negativen Elektrode angeordnet ist,
Formen eines Vorverschweißungsabschnitts (200) auf einer Elektrodenfahne (120), die sich von der positiven Elektrode oder der negativen Elektrode erstreckt, und
Formen eines Hauptverschweißungsabschnitts (300) zum Verbinden eines Elektrodenleiters (130) mit einer Oberfläche der Elektrodenfahne (120),
wobei zumindest ein Teil des Vorverschweißungsabschnitts (200) und der Hauptverschweißungsabschnitt (300) einander überlappen, und
der Hauptverschweißungsabschnitt (300) in der Längsrichtung der Elektrodenfahne (120) näher an dem Stapelkörper (110) angeordnet ist als der Vorverschweißungsabschnitt (200).

13. Verfahren nach Anspruch 12,
ferner umfassend einen Schritt des Entfernens der nicht verschweißten Elektrodenfahne nach dem Schritt des Formens des Vorverschweißungsabschnitts (200).

14. Verfahren nach Anspruch 12,
ferner umfassend einen Schritt des Formens eines Eckabschnitts des Elektrodenleiters (130) in einer runden Form vor dem Schritt des Formens eines Hauptverschweißungsabschnitts (300).

15. Verfahren nach Anspruch 12, wobei:
der Schritt des Formens eines Hauptverschweißungsabschnitts (300) ferner einen Schritt des Anordnens eines Elektrodenleiters (130) auf einer Oberfläche einer Elektrodenfahne (120) und einen Schritt des Anordnens der Rückseitenplatte (140) auf der anderen Oberfläche der Elektrodenfahne (120) umfasst.

## Revendications

1. Cellule de batterie (100) comprenant :
un corps empilé (110) comprenant une électrode positive, une électrode négative et un séparateur interposé entre l'électrode positive et l'électrode négative,
une patte d'électrode (120) s'étendant à partir de l'électrode positive ou de l'électrode négative du corps empilé, et
un conducteur d'électrode (130) couplé à la patte d'électrode (120),
dans laquelle les pattes d'électrode (120) sont formées avec une partie de pré-soudage (200) connectant des pattes d'électrode (120) respectives et une partie de soudage principale (300) couplant la patte d'électrode (120) et le conducteur d'électrode (130),
dans laquelle la partie de pré-soudage (200) comprend un bord latéral interne (210) et un bord latéral externe (220),
dans laquelle au moins un des points de soudage (302) de la partie de soudage principale (300) chevauche un bord latéral interne (210) de la partie de pré-soudage (200), et
dans laquelle un bord latéral interne (210) de la partie de pré-soudage (200) est disposé plus près du corps empilé (110) qu'un bord latéral externe (220) de la partie de pré-soudage (200) dans la direction longitudinale (y) de la patte d'électrode (120).

2. Cellule de batterie (100) selon la revendication 1, dans laquelle :
la partie de soudage principale (200) comprend une première ligne de soudage (310), une deuxième ligne de soudage (320) et une troisième ligne de soudage (330) qui sont disposées côte à côte les unes par rapport aux autres, et
la première ligne de soudage (310) est disposée entre la deuxième ligne de soudage (320) et la troisième ligne de soudage (330), la deuxième ligne de soudage (320) chevauche la partie de pré-soudage (200), et la troisième ligne de soudage (330) ne chevauche pas la partie de pré-soudage (200).

3. Cellule de batterie selon la revendication 2, dans laquelle :
la deuxième ligne de soudage forme un bord de la partie de soudage principale, et
un bord latéral externe de la partie de pré-soudage est situé à l'extérieur de la deuxième ligne de soudage dans une direction s'éloignant du corps empilé sur la base de la direction longitudinale de la patte d'électrode.

4. Cellule de batterie selon la revendication 2, dans laquelle :
la troisième ligne de soudage est située à l'extérieur du bord latéral interne de la partie de pré-soudage dans une direction plus proche du corps empilé sur la base de la direction longitudinale de la patte d'électrode.

5. Cellule de batterie (100) selon la revendication 1, dans laquelle :
au moins un des points de soudage (302) de la partie de soudage principale (300) est situé à l'intérieur de la partie de pré-soudage (200).

6. Cellule de batterie (100) selon la revendication 1, dans laquelle :
la partie de pré-soudage (200) est formée de manière à être espacée d'un bord de la patte d'électrode (120) dans la direction de la largeur (x) de la patte d'électrode (120).

7. Cellule de batterie (100) selon la revendication 6, dans laquelle :
une longueur de la patte d'électrode (120) de la partie de pré-soudage (200) dans la direction de largeur est plus petite qu'une largeur de la patte d'électrode (120).

8. Cellule de batterie (100) selon la revendication 6, dans laquelle :
une partie de la partie de soudage principale (300) est formée à l'extérieur d'un bord de la patte d'électrode (120) de la partie de pré-soudage (200) dans la direction de largeur.

9. Cellule de batterie (100) selon la revendication 1, dans laquelle :
une partie de coin du conducteur d'électrode (130) présente une forme arrondie.

10. Cellule de batterie (100) selon la revendication 1, dans laquelle :
le conducteur d'électrode (130) est situé sur une surface de la patte d'électrode (120), et
une plaque de face arrière (140) est située sur l'autre surface de la patte d'électrode (120) faisant face à une surface de la patte d'électrode (120).

11. Cellule de batterie (100) selon la revendication 10, dans laquelle :
une partie de soudage supplémentaire (300') est formée entre la plaque de face arrière (140) et la patte d'électrode (120).

12. Procédé de fabrication d'une cellule de batterie (100), comprenant les étapes de :
formation d'un corps empilé (110) comprenant une électrode positive, une électrode négative et un séparateur interposé entre l'électrode positive et l'électrode négative,
formation d'une partie de pré-soudage (200) sur une patte d'électrode (120) s'étendant à partir de l'électrode positive ou de l'électrode négative, et
formation d'une partie de soudage principale (300) pour connecter un conducteur d'électrode (130) à une surface de la patte d'électrode (120),
dans lequel au moins une partie de la partie de pré-soudage (200) et de la partie de soudage principale (300) se chevauchent mutuellement, et
la partie de soudage principale (300) est située plus près du corps empilé (110) que la partie de pré-soudage (200) dans la direction longitudinale de la patte d'électrode (120).

13. Procédé selon la revendication 12,
comprenant en outre une étape d'élimination de la patte d'électrode non soudée, après l'étape de formation de la partie de pré-soudage (200).

14. Procédé selon la revendication 12,
comprenant en outre une étape de formation d'une partie de coin du conducteur d'électrode (130) selon une forme arrondie, avant l'étape de formation d'une partie de soudage principale (300).

15. Procédé selon la revendication 12, dans lequel :
l'étape de formation d'une partie de soudage principale (300) comprend en outre une étape d'agencement d'un conducteur d'électrode (130) sur une surface d'une patte d'électrode (120) et une étape d'agencement de la plaque de face arrière (140) sur l'autre surface de la patte d'électrode (120).
